Europäisches Patentamt

European Patent Office

Office européen des brevets

(11) Veröffentlichungsnummer: **0 337 941**
**A1**

## (12) EUROPÄISCHE PATENTANMELDUNG

(21) Anmeldenummer: 89810241.3

(22) Anmeldetag: 30.03.89

(51) Int. Cl.⁴: **F 16 L 58/00**

(30) Priorität: 30.03.88 CH 1197/88

(43) Veröffentlichungstag der Anmeldung:
18.10.89 Patentblatt 89/42

(84) Benannte Vertragsstaaten:
AT BE CH DE ES FR GB GR IT LI LU NL SE

(71) Anmelder: **Fischer, Kurt**
**Bernstrasse 17**
**CH-3052 Zollikofen (CH)**

**Stebler, Albano**
**Bümpliz-Strasse 97**
**CH-3018 Bern (CH)**

(72) Erfinder: **Fischer, Kurt**
**Bernstrasse 17**
**CH-3052 Zollikofen (CH)**

**Stebler, Albano**
**Bümpliz-Strasse 97**
**CH-3018 Bern (CH)**

(74) Vertreter: **Häfner, Walter, Dipl.-Ing.**
**Hildanusstrasse 3**
**CH-3013 Bern (CH)**

(54) **Kalk- und Rostschutzgerät.**

(57) Dieses Kalk- und Rostschutzgerät besteht aus einem zweiteiligen Block [1a, 1b] aus einem Nichteisenmetall. Der Block wird vor den zu schützenden Geräten auf ein geradlinig verlaufendes Rohrstück der Wasserleitung aufgesetzt, derart daß die Innenwandung seiner zentralen Bohrung [3] in metallischem Kontakt mit der Oberfläche der Wasserleitung steht.

EP 0 337 941 A1

Bundesdruckerei Berlin

**Beschreibung**

## Kalk- und Rostschutzgerät

Die Verkalkung von mit Leitungswasser gespeisten Geräten, wie Boilern, Waschmaschinen, Geschirrspülern und dergleichen, ist ein altbekanntes Übel. Es wurden auch bereits zahlreiche Vorschläge gemacht, bei denen chemische, mechanische und magnetische Mittel eingesetzt wurden, um diesem die Lebensdauer und das Funktionieren dieser Geräte stark beeinträchtigenden Übelstand abzuhelfen. Die Verwendung chemischer Mittel erfordert aber häufige Wartung und ist heutzutage bei dem sensibilisierten Umweltbewußtsein nicht mehr erwünscht, und die Anwendung mechanischer und magnetischer Geräte führt meist zu komplizierten und teuren Anordnungen.

Die Erfindung schlägt daher ein besonders einfaches und, wie die praktischen Versuche der Erfinder an etlichen, verschieden ausgebildeten Prototypen zeigten, trotzdem sehr wirksames Gerät vor; seine wesentlichen Merkmale ergeben sich aus dem Patentanspruch 1.

Die Zweiteiligkeit des Blockes [1a, 1b], wobei die Trennebene durch die Achse der Bohrung [3] verläuft, ermöglicht eine auch nachträglich einfache Montage auf einem geraden, beispielsweise ca. 18 cm langen Stück des Leitungsrohres, ohne daß dieses hierfür aufgetrennt werden müßte. Häufig verläuft das Leitungsrohr parallel einer Wand mit etwas Abstand von dieser, aber auch dann ist die Montage des neuen Kalk- und Rostschutzgerätes problemlos möglich, denn dann ordnet man es so an, daß die Schmalseiten des quaderförmigen Blockes [1a, 1b] senkrecht zur Wand stehen, die Breitseiten parallel zu dieser, und wird man die Abmessungen im übrigen mit Rücksicht auf diesen Anwendungsfall wählen, wozu auch noch zu bemerken ist, daß die Bohrung [3] nicht unbedingt genau in der Mitte des Blockes [1a, 1b] verlaufen muß. Verläuft sie nicht in der Mitte, so sind die beiden Teile des Blockes nicht mehr in jeder Hinsicht einander gleich, aber dies ist im Hinblick auf die Wirksamkeit auch nicht erforderlich.

So ist es auch nicht erforderlich, daß der Block [1a, 1b] genau quaderförmig im geometrischen Sinne ist. Beispielsweise können die der Bohrung [3] parallelen Längskanten mehr oder weniger abgeschrägt sein, bis hin zu einem Querschnitt senkrecht zu ihnen, der einem Rhombus näher ist als einem Quadrat. Eine dem angenäherte Gestaltung erhält man dadurch, daß mindestens die eine der der Bohrung [3] parallelen Schmalseiten des in seiner Grundform quaderförmigen Blockes [1a, 1b] mindestens eine der Bohrung parallele, vorstehende Rippe aufweist. Anscheinend ist die Ausdehnung in einer Ebene durch die Rohrachse bzw. parallel zur benachbarten Wand nicht ohne Einfluß auf die Wirksamkeit des neuen Kalk- und Rostschutzgerätes.

Ist es bezüglich der Wirksamkeit auch nicht nötig, daß die beiden Teile des Blockes [1a, 1b] einander genau gleich sind, so kann Gleichheit bei gewissen, dem Fachmann geläufigen Herstellungsverfahren doch immerhin kostensparend wirken.

Die Versuche haben gezeigt, daß es für die Wirksamkeit des neuen Kalk- und Rostschutzgerätes von Bedeutung ist, wenn es aus einem Material von möglichst guter elektrischer Leitfähigkeit besteht. Da Kupfer und Silber aus Kostengründen praktisch außer Betracht fallen, ist ein sogenanntes Reinaluminium in erster Linie vorteilhaft, das nur geringe Spuren von Verunreinigungen enthält. Spanabhebende Bearbeitung, die bei Reinaluminium Mühe bereitet, kann durchaus vermieden werden, aber bei Herstellungsverfahren, die eine solche Bearbeitung einschließen, kann man statt dessen eine besser bearbeitbare Aluminium-Legierung wählen, wenn auch mit einer gewissen Wirksamkeits-Einbuße. Damit diese in engen Grenzen bleibt, sollten Silizium und Kupfer unter den Legierungsbestandteilen in möglichst geringem Maße vertreten sein.

Um bleibend guten Kontakt zwischen dem neuen Gerät und dem Leitungsrohr sicherzustellen, kann man die Bohrung [3] mit einer dünnen Kupferschicht auskleiden, z.B. durch galvanisches Auftragen oder in Form einer dünnen Kupfer-Folie. Letztere kann man auch bei der Montage um das Leitungsrohr wickeln. Dem gleichen Zweck dient es, wenn man bei der Montage zwischen der Bohrung [3] und dem Leitungsrohr ein Fett einbringt; vorzugsweise jenes Fett, das zur Sicherstellung bleibend guten Kontaktes in der Elektrotechnik bei Potentiometern u.dgl. verwendet wird.

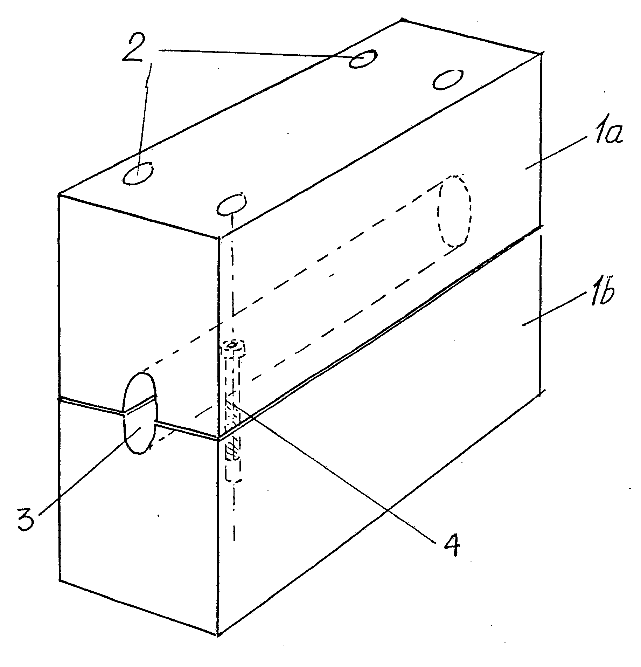

Ein Ausführungsbeispiel des Erfindungsgegenstandes wird nachfolgend anhand der Zeichnung näher erläutert.

Wie aus der Figur ersichtlich, besteht das Gerät aus einem aus zwei Teilen 1a und 1b zusammengesetzten, quaderförmigen Block, vorzugsweise aus Reinaluminium. Um den Block auf ein Leitungswasser führendes Rohr montieren zu können, ist eine zentral in seiner Längsachse verlaufende Bohrung 3 vorgesehen, deren Innendurchmesser dem Außendurchmesser des Leitungsrohres entspricht, für welches der Block jeweils bestimmt ist. Auf diese Weise ist gewährleistet, daß ein inniger Kontakt zwischen Rohr und Block besteht. Die beiden Teile 1a, 1b werden nach dem Aufsetzen aufs Rohr mittels in Senklöchern 2 angebrachten Inbusschrauben 4 zusammengespannt. Der Block 1a, 1b wird vor oder nach der Meßuhr auf der Wasserleitung montiert, er kann aber prinzipiell auch auf jedem geradlinigen Leitungsstück vor den jeweils zu schützenden Apparaten oder Geräten angeordnet werden.

Mit der Bildung von Kalkkrusten in den von Wasser durchströmten Leitungsrohren und Geräten geht für gewöhnlich Rostansatz einher. Teilweise handelt es sich dabei um Rostteilchen aus dem vorangehenden Leitungsnetz, die sich zusammen mit den Kalkkristallen anlagern, im übrigen aber um ein Vorrosten an Ort und Stelle infolge des ständigen Kontaktes mit Wasser und Sauerstoff, der im Wasser gelöst ist. Es wurde nun festgestellt, daß sich unter der Wirkung des neuen Kalk- und Rostschutzgerätes an der inneren Oberfläche der Leitungsrohre usw. ein sich schmierig anfühlender Schutzfilm bildet, der nicht nur die Anlagerung von Teilchen, sondern auch ein Verrosten verhindert.

Wie zahlreiche Versuche gezeigt haben, wird die Ablagerung von Kalk und Rost in den hinter dem Block [1a, 1b] liegenden wasserführenden Leitungen und Hohlräumen weitgehend vermieden. Dabei ist es wesentlich, daß der Kalk dem Wasser nicht entzogen, sondern lediglich in seiner Struktur so verändert wird, daß er sich nicht mehr festsetzt. Er bildet beim Ausfällen nicht, wie sonst, bizarr geformte Kristalle, die sich ineinander verhaken und die Rohr- und Gerätewandungen innen mit harten, fest haftenden Krusten überziehen, sondern feinste, amorphe Teilchen, die vom hindurchströmenden Wasser ohne weiteres mitgeführt und weggeschwemmt werden. Allerdings können sich auf an ihrer Oberfläche gegenüber dem Wasser unvernünftig hoch erhitzten Heizkörpern immer noch, wenn auch weniger, Krusten aus zuvor noch nicht ausgefälltem Kalk bilden; dies bedeutet indessen, daß die Hersteller solcher Geräte die spezifische Wärmebelastung [Watt pro $cm^2$] an der Heizkörperoberfläche in angemessenen Grenzen halten sollten, etwa - soweit noch nicht geschehen - durch Wahl einer größeren Oberfläche.

Wenn auch die physikalischen und chemischen Ursachen und Zusammenhänge des Schutzes vor Ablagerungen, wie er vom neuen Kalk- und Rostschutzgerät erzielt wird, bisher nicht völlig geklärt sind, so darf doch angenommen werden, daß er auf das elektrische Kontaktpotential zurückzuführen ist, das sich zwischen den unterschiedlichen Metallen von Rohr und Block bildet. Durch die dadurch auftretenden elektrischen Felder und die durch das Wasser fließenden Ausgleichsströme werden offenbar die Kristallisationseigenschaften des Kalkes derart beeinflußt, daß ein Auskristallisieren mit Bildung harter Belagschichten vermieden wird.

Erdöl und Heizöl enthalten erhebliche Mengen von Verunreinigungen, teils in Partikelform, teils darin gelöst oder emulgiert, und bekanntlich bilden sich daraus Ablagerungen, welche die Rohrleitungen usw. und die Brenner nach kurzer Zeit verstopfen oder häufiges Auswechseln von Filtereinsätzen erfordern. Hiergegen ist das neue Kalk- und Rostschutzgerät ebenfalls ein wirksames Mittel, wie erste Resultate von Dauerversuchen nun gezeigt haben.

## Patentansprüche

1. Kalk- und Rostschutzgerät, dadurch gekennzeichnet, daß es aus einem zweiteiligen, im wesentlichen quaderförmigen Block [1a, 1b] aus einem Nicht-Eisenmetall besteht, durch dessen Längsachse sich eine Bohrung [3] erstreckt, deren Innendurchmesser dem Außendurchmesser des Leitungsrohres entspricht, auf welches er montiert zu werden bestimmt ist.

2. Kalk- und Rostschutzgerät nach Patentanspruch 1, dadurch gekennzeichnet, daß die der Bohrung [3] parallelen Längskanten des Blockes [1a, 1b] abgeschrägt sind.

3. Kalk- und Rostschutzgerät nach Patentanspruch 1, dadurch gekennzeichnet, daß mindestens die eine der der Bohrung [3] parallelen Schmalseiten des Blockes [1a, 1b] mindestens eine, der Bohrung [3] parallele, vorstehende Rippe aufweist.

4. Kalk- und Rostschutzgerät nach Patentanspruch 1, dadurch gekennzeichnet, daß die beiden Teile des Blockes [1a, 1b] einander gleich sind.

5. Kalk- und Rostschutzgerät nach Patentanspruch 1, dadurch gekennzeichnet, daß der Block [1a, 1b] aus Reinaluminium besteht.

6. Kalk- und Rostschutzgerät nach Patentanspruch 1, dadurch gekennzeichnet, daß der Block [1a, 1b] aus einer Aluminium-Legierung besteht, welche leichter spanabhebend bearbeitbar ist als Reinaluminium.

7. Kalk- und Rostschutzgerät nach Patentanspruch 1, dadurch gekennzeichnet, daß die Bohrung [3] mit einer dünnen Kupferschicht ausgekleidet ist.

8. Verwendung des Kalk- und Rostschutzgerätes nach Patentanspruch 1 zur Verhinderung oder Verminderung verstopfend wirkender Ablagerungen von Verunreinigungen in Rohrleitungen, Apparaten und Brennern von Anlagen, welche Rohöl oder Heizöl enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 487 230 (ANTHONY) <br> * Spalte 1, Zeilen 23-40; Figur * <br> --- | 1 | F 16 L 58/00 <br> C 23 F 15/00 |
| A | US-A-4 605 498 (KULISH) <br> * Spalte 1, Zeilen 29-52; Figuren 1,6 * <br> --- | 1 | |
| A | US-A-1 705 197 (VAN A. MILLS) <br> * Anspruch; Figur 2 * <br> --- | 1 | |
| A | DE-C- 837 836 (SCHMID) <br> * Anspruch 1 * <br> --- | 1 | |
| A | DE-U-8 432 797 (SCHUSS) <br> --- | | |
| A | DE-A-3 139 154 (NIPPONDENSO et al.) <br> --- | | |
| A | GB-A-2 137 229 (HUGHES) <br> ----- | | |

**RECHERCHIERTE SACHGEBIETE (Int. Cl.5)**

F 16 L 53/00
F 16 L 58/00
G 01 N 17/00
C 23 F 14/00
C 23 F 15/00
F 28 F 19/00
H 05 K 7/00

Der vorliegende Recherchenbericht wurde für alle Patentansprüche erstellt

| Recherchenort | Abschlußdatum der Recherche | Prüfer |
|---|---|---|
| BERLIN | 29-06-1989 | SCHAEFFLER C.A.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P0403)